# EUROPÄISCHE PATENTSCHRIFT

(11) **EP 1 361 108 B1**
(45) Veröffentlichungstag und Bekanntmachung des Hinweises auf die Patenterteilung: **19.05.2010**
(21) Anmeldenummer: 03009682.0
(22) Anmeldetag: 30.04.2003
(51) Int. Cl.: B60N 3/00, B64D 11/06, G09F 21/04, G09F 21/06, B60N 3/10, B61D 33/00

(54) **Klapptisch für einen Sitz in einem Verkehrsmittel**
Folding table for a seat in a means of transport
Table pliante pour un siège dans un moyen de transport

(30) Priorität: 08.05.2002 DE 20207355 U
(43) Veröffentlichungstag der Anmeldung: 12.11.2003
(73) Patentinhaber: Inviseo Media Holdings Ltd., London W6 7BA (GB)
(72) Erfinder: Berger, Georg, 46244 Bottrop (DE); Brandt, Hans-Jörg, 53949 Dahlem (DE)
(74) Vertreter: Christophersen & Partner

(56) Entgegenhaltungen:
- WO-A-98/24689
- WO-A-03/029050
- DE-A- 4 340 189
- DE-U- 20 108 619
- DE-U- 20 113 534
- US-A- 5 010 668
- US-A- 5 423 508

## Beschreibung

Die Erfindung betrifft einen Klapptisch an der Rückseite der Rückenlehne eines Fahrgastsitzes in einem Luft-, Land- oder Wasserfahrzeug, mit den im Oberbegriff des Anspruchs 1 angegebenen Merkmalen.

Ein derartiger Klapptisch ist aus der DE 201 13 534 U1 bekannt. In der in Ruhestellung sichtbaren Seite des Klapptisches ist eine Vertiefung mit Hinterschneidungen angeordnet. Ein als Werbeträger dienender Einsatz ist in die so gestaltete Vertiefung einsetzbar. Zu diesem Zweck besteht der Einsatz aus einem durchsichtigen Kunststoff, der elastisch verformbar ist. Unter Druckausübung, d. h. Biegen des Einsatzes lassen sich dessen Kanten hinter den an dem Klapptisch ausgebildeten Hinterschneidungen einschnappen. Nachteilig ist, dass auf ebensolche Weise, nämlich durch Druckausübung auf den elastisch verformbaren Einsatz, dieser auch wieder aus der Vertiefung entfernt werden kann, weshalb der Klapptisch keine ausreichende Sicherheit gegen ein unbefugtes Herausnehmen des Einsatzes bietet.

Dieselben Nachteile bestehen bei einem aus der DE 201 08 619 U1 bekannten Klapptisch. Auch hier erfolgt die Befestigung des als Werbeträger dienenden Einsatzes durch Biegen des Einsatzes, wodurch umgekehrt auch das Herausnehmen des Einsatzes aus den entsprechenden Aussparungen des Klapptischs einfach von statten geht, und keine ausreichende Sicherheit gegen ein unbefugtes Herausnehmen besteht.

Auch aus der WO 98/24689 und der US 5,010,668 sind an der Rückenseite der Rückenlehne von Fahrgastsitzen befestigte Klapptische bekannt, die mit Werbeträgerflächen für einen auswechselbaren Werbeträger versehen sind. Maßnahmen gegen ein unbefugtes Herausnehmen der hierbei verwendeten Einsätze sind nicht getroffen.

Auch bei dem Klapptisch gemäß der DE 299 07 135 U1 weist die Tischplatte an der Unterseite eine Aussparung auf, in der ein plattenförmiger Einsatz herausnehmbar gelagert ist und der ein Einlegefach zur Aufnahme eines blattförmigen Informationsträgers aufweist. Das Einlegefach ist zur Sichtfläche des Einsatzes hin durch eine durchsichtige Scheibe abgedeckt. Der Einsatz ist als Rahmen ausgebildet, wobei das Einlegefach zur gegenüberliegenden Fläche der Aussparung der Tischplatte hin offen ist. Der Einsatz ist in der Aussparung der Tischplatte in deren vertikaler Ruhestellung nach oben hin ausziehbar gelagert, wobei im unteren Bereich des Einsatzes von beiden Seiten je ein Schwenkzapfen absteht, der in jeweils eine seitliche Verschiebenut der Aussparung der Tischplatte eingreift. Im oberen Bereich des Einsatzes steht von beiden Seiten je ein Rastvorsprung ab, der in die Verschiebenut eingreift. Der Einsatz ist in der Aussparung der Tischplatte durch wenigstens ein Feststellelement blockierbar.

Dieser Klapptisch ist vielteilig und kompliziert aufgebaut und bietet keine ausreichende Sicherheit gegen unbefugtes Öffnen durch Herausnehmen des Einsatzes aus der Aussparung der Tischplatte. Aufgrund des komplizierten Aufbaus ist dieser Klapptisch auch verhältnismäßig schwer, was bei Verwendung an einem Luftfahrzeuggastsitz nachteilig ist.

Weitere Klapptische sind in der DE 43 40 189 A1 und der DE 297 01 389 U1 beschrieben.

Der Erfindung liegt die Aufgabe zugrunde, einen Klapptisch zu schaffen, der die genannten Nachteile des Standes der Technik nicht aufweist und mehr Sicherheit gegen unbefugtes Manipulieren an der Werbeträgerfläche bietet.

Zur Lösung wird ein Klapptisch an der Rückseite der Rückenlehne eines Fahrgastsitzes in einem Luft-, Land- oder Wasserfahrzeug mit den in Anspruch 1 angegebenen Merkmalen vorgeschlagen.

Die Hinterschneidungen oder die Nut lassen sich gleichzeitig mit der Herstellung des Klapptisches in der Vertiefung anbringen, während der Einsatz oder der Rahmen eine umlaufende, nutartige Vertiefung aufweist, in die ein elastischer Profilring eingelegt ist, der den die umlaufende Hinterschneidung hintergreifenden oder in die umlaufende Nut eingreifenden Vorsprung bildet.

Wenn der Rahmen in der beschriebenen Weise in die Vertiefung eingeklipst ist, lässt er sich nur mittels eines besonderen Werkzeuges aus der Vertiefung herausnehmen, das dem Fahrgast nicht zur Verfügung steht.

Da der Rahmen keinerlei Führungen, in den Führungen gleitende Vorsprünge und dgl. aufweist, läßt er sich sehr schmal und mit geringem Gewicht ausführen. Der elastische Profilring kann vorzugsweise aus einer Runddichtung bestehen, die in die umlaufende, nutartige Vertiefung des Einsatzes eingelegt und darin aufgrund ihrer Elastizität gehalten wird. Diese Runddichtung ist ausreichend verformbar, um das Einklipsen des Rahmens in die Vertiefung und das anschließende Festhalten des Rahmens in der umlaufenden Hinterschneidung der Vertiefung zu gewährleisten. Gleichzeitig ergibt sich ein Dichteffekt gegenüber Reinigungsmitteln.

Der Einsatz kann mit einer durchsichtigen Sichtfläche versehen sein, hinter der sich der Werbeträger anordnen läßt. Die Werbeträgerfläche kann auch als Bildschirm ausgebildet sein, der dann nicht nur Werbebotschaften sondern auch Spielfilme und Nachrichten darstellen kann.

Neben der Werbeträgefläche kann ein ausklappbarer Flaschen- oder Becherhalter angeordnet sein, so daß während der Betrachtung der Werbebotschaft oder eines Spielfilms Getränke bereitgehalten werden können.

Vorzugsweise ist der Klapptisch als folienumhüllter Schaumstoff- oder Wabenkörper mit eingebrachten fixierten Aufnahmeschienen an den seitlichen Rändern ausgebildet. Hierdurch wird ein leichter und dennoch stabiler Aufbau erreicht, der eine stoßschützende Funktion aufweist.

Ebenso ist es möglich, den Klapptisch aus zwei spritzgegossenen Kunststoffhalbschalen zu einer Einheit zusammenzuklipsen.

Die Erfindung wird nachstehend anhand eines in der Zeichnung dargestellten Ausführungsbeispiels des näheren erläutert. In der Zeichnung zeigen:
- Fig. 1: eine Draufsicht auf die mit der Werbeträgerfläche versehene Seite eines Flugzeugklapptisches,
- Fig. 2: einen Schnitt entlang der Linie A - A in Fig. 1,
- Fig. 3: eine ausschnittweise Vergrößerung der Fig. 2,
- Fig. 4: einen Schnitt entlang der Linie B - B in Fig. 1 und
- Fig. 5: einen Schnitt entlang der Linie C - C in Fig. 1.
- Fig. 6: eine teilweise Schnittansicht einer nicht zur Erfindung gehörenden Ausführungsform der Anordnung des Werbträgers im Klapptisch

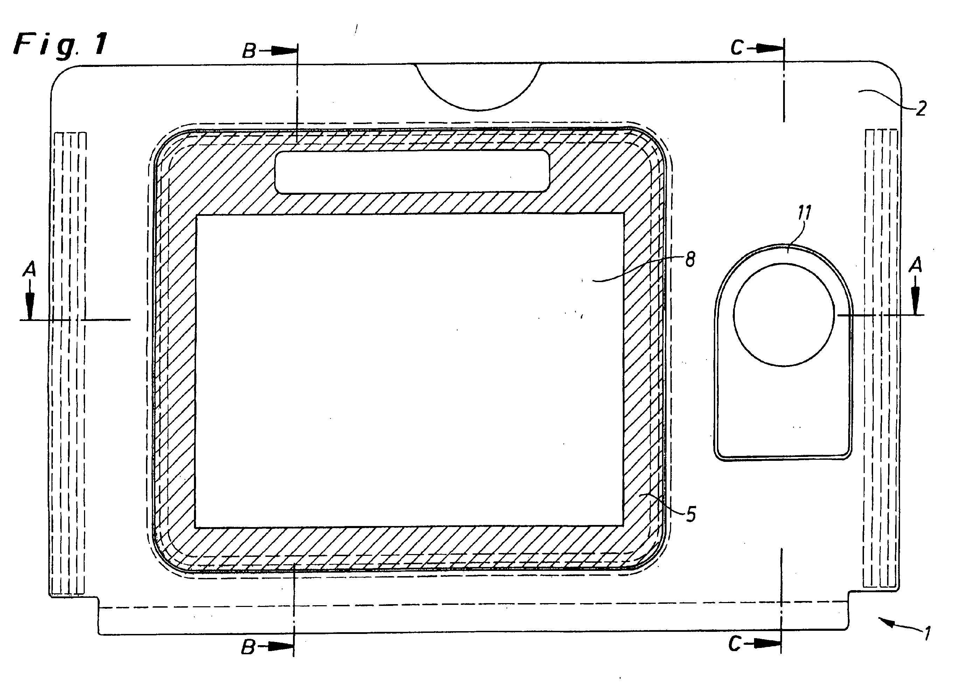

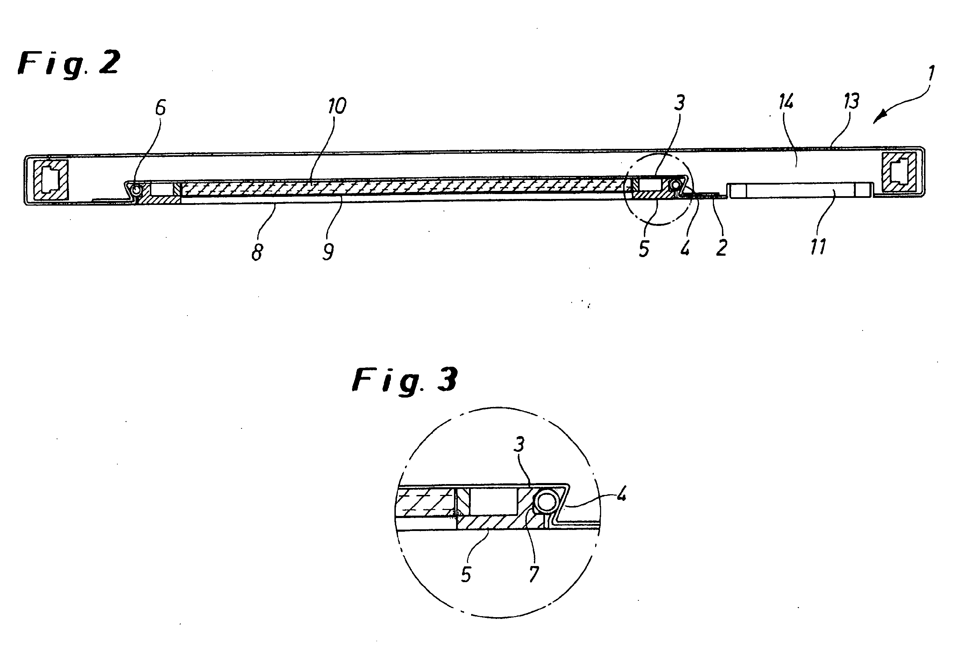

Ein an der Rückseite der Rückenlehne eines Fahrgastsitzes in einem Luft-, Land- oder Wasserfahrzeug angeordneter Klapptisch 1, der zwischen einer an die Rückenlehne herangeklappten Ruhestellung und einer ausgeklappten Benutzungsstellung verstellbar ist, ist in Fig. 1 mit seiner in der Ruhestellung sichtbaren Seite 2 dargestellt. Diese Seite 2 ist mit einer ersten hinterschnittenen Vertiefung 3 versehen, deren umlaufende Hinterschneidung 4 in den Fig. 2 bis 4 deutlich sichtbar ist. Ein Einsatz 5, der an die Form der Vertiefung 3 angepaßt ist, ist mit einer umlaufenden, nutartigen Vertiefung 7 versehen, in die sich ein elastischer Profilring 6 beispielsweise in Form eines Dichtungsschlauchs einlegen läßt, der einen umlaufenden Vorsprung 6 bildet und in der dargestellten, eingeklipsten Stellung die umlaufende Hinterschneidung 4 hintergreift. Der Einsatz 5 weist eine durchsichtige Sichtfläche 8 auf, die die Werbeträgerfläche bildet während im Bereich der Schraffur eine blickdichte Struktur aufgesetzt oder integriert ist, die den Rand eines Werbeträgers 9 und den Befestigungsbereich abdeckt. Hinter der Sichtfläche 8 ist der Werbeträger 9 aus einer bedruckten Folie oder anderem Material angeordnet. Eine Schaumstoffunterlage 10 hält den Werbeträger 9 im eingeklipsten Zustand fest an die Hinterseite der Sichtfläche 8 gepreßt.

Neben der Vertiefung 3 ist in der sichtbaren Seite 2 des Klapptisches 1 eine weitere Vertiefung 12 angeordnet, in die sich ein Flaschen- oder Becherhalter 11 einklappen läßt.

Der Klapptisch 1 besteht aus einem Schaumstoffkörper 14, der in eine Folie 13, die aus 2 Strukturschalen besteht und mit Stützstoff verklebt wird, eingeschäumt ist.

Entlang den seitlichen Rändern des Klapptisches 1 sind Versteifungsschienen 15, vorzugsweise aus Aluminium eingeschäumt, an denen die Befestigungselemente für den Klapptisch 1 zur Befestigung an der Rückenlehne des Fahrgastsitzes angebracht werden.

Der Rahmen 5 mit dem Werbeträger 9 und der Schaumstoffunterlage 10 läßt sich in die Vertiefung 3 einklipsen, wobei der Profilring 6 zunächst verformt wird und sich anschließend so ausdehnt, daß er die umlaufende Hinterschneidung 4 hintergreift und die gesamte Anordnung klapperfrei festhält. Durch die Schaumstoffunterlage 10 und die Ausbildung des Klapptisches 1 als Schaumstoffkörper 14 ist ein erhöhter Unfallschutz aufgrund der stoßaufnehmenden Eigenschaften des Klapptisches 1 gegeben.

Das Bauteil aus dem Rahmen 5, der Sichtfläche 8, dem eingelegten Werbeträger 9 und der Schaumstoffunterlage 10 läßt sich ohne besonderes Werkzeug nicht aus der Vertiefung 3 herausnehmen, da sich dafür keinerlei Handhabe bietet. Andererseits läßt sich in den Spalt zwischen dem Rahmen 5 und der umlaufenden Hinterschneidung 4 ein flacher Hebel, ggf. ein Schraubendreher einführen, und der Rahmen 5 läßt sich damit auf einfache Weise heraushebeln.

Es werden zwei Positionen zur Einführung des Werkzeuges gewählt, die jeweils einen optimalen Hebelarm zu der sich ergebenden Drehachse definieren. Die Eingreifpunkte sind derart ausgeführt, daß die Nut zur Aufnahme des Dicht- und Fixierungsprofils den Freiraum durch Wegdrücken in die erweiterte Nut ermöglicht.

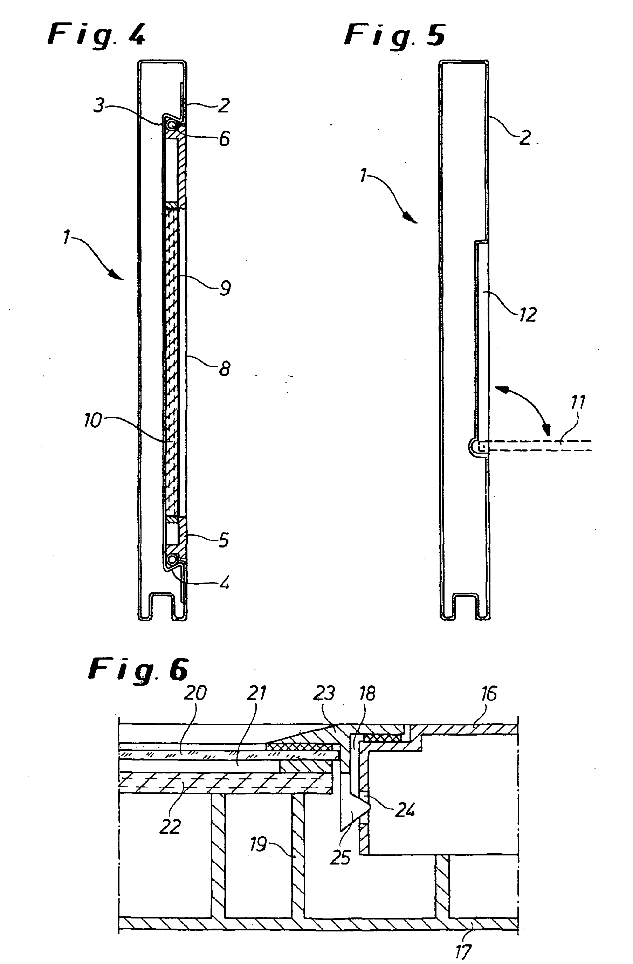

Bei der in Figur 6 dargestellten nicht zur Erfindung gehörenden Ausführungsform besteht der Klapptisch 1 aus zwei zusammengeklipsten Kunststoffhalbschalen 16, 17, von denen die obere Kunststoflhalbschale 16 eine Ausnehmung aufweist, die in Verbindung mit Stützrippen 19 an der unteren Kunststoffhalbschale die Vertiefung 18 zur Aufnahme des Werbeträgers bildet. Im vorliegenden Fall ist auf die Stützrippen 19 zunächst eine Schaumstoffunterlage 22 gelegt, darauf ein als Werbeträger dienendes Bild 21, das wiederum durch eine daraufgelegte Glasscheibe 20 abgedeckt wird. Die gesamte Anordnung aus der Glasscheibe 20, dem Bild 21 und der Schaumstoffunterlage 22 wird mittels eines umlaufenden Rahmens 23 in der Vertiefung 18 gehalten, wobei der Rahmen 23 die Glasscheibe 20 um - und im Randbereich übergreifend umfaßt und mit in die Vertiefung 18 hineinragenden Rastnasen 25, die in Nutabschnitte 24 eingreifen, festhält.

Auch diese Anordnung läßt sich nur mittels eines Spezialwerkzeuges aus dem Klapptisch herausnehmen, das aus dem bereits erwähnten flachen Hebel oder einem an der Glasscheibe 20 angreifenden Saugkopf bestehen kann.

Die Erfindung ist nicht auf die dargestellten und beschriebenen Ausführungsbeispiele beschränkt sondern erstreckt sich auf alle Abwandlungen und Äquivalente gemäß den in den Ansprüchen definierten Merkmalen.

## Patentansprüche

1. Klapptisch (1) an der Rückseite der Rückenlehne eines Fahrgastsitzes in einem Luft-, Land- oder Wasserfahrzeug, der zwischen einer an die Rückenlehne herangeklappten Ruhestellung und einer ausgeklappten Benutzungsstellung verstellbar ist und dessen in Ruhestellung sichtbare Seite (2) als Werbeträgerfläche (8) für einen auswechselbaren Werbeträger (9) ausgebildet ist,
wobei die als Werbeträgerfläche (8) ausgebildete Seite (2) des Klapptisches (1) eine Vertiefung (3) mit wenigstens bereichsweise angeordneten Hinterschneidungen (4) oder Nuten aufweist
und ein den Werbeträger (9) aufnehmender, an die Vertiefung (3) angepasster Einsatz (5) oder ein den Einsatz (5) umgreifender und im Randbereich übergreifender Rahmen mit die Hinterschneidungen (4) oder Nuten hintergreifenden Vorsprüngen (6) in die Vertiefung (3) einklipsbar ist,
**dadurch gekennzeichnet,**
**dass** der Einsatz (5) eine umlaufene, nutartige Vertiefung (7) aufweist, in die ein elastischer Profilring (6) eingelegt ist, der den die umlaufende Hinterschneidung (4) hintergreifenden Vorsprung bildet.

2. Klapptisch nach Anspruch 1, **dadurch gekennzeichnet, dass** der elastische Profilring (6) aus einer Schlauchdichtung besteht.

3. Klapptisch nach einem der Ansprüche 1 oder 2, **dadurch gekennzeichnet, dass** der Einsatz (5) mit einer durchsichtigen Sichtfläche (8) versehen ist, hinter der sich der Werbeträger (9) herausnehmbar anordnen lässt und einen umlaufenden, undurchsichtigen Rand aufweist.

4. Klapptisch nach einem der Ansprüche 1 oder 2, **dadurch gekennzeichnet, dass** die Werbeträgerfläche (8) als Bildschirm ausgebildet ist.

5. Klapptisch nach einem der Ansprüche 1 bis 4, **dadurch gekennzeichnet, dass** neben der Werbeträgerfläche (8) ein ausklappbarer Flaschen- oder Becherhalter (11) angeordnet ist.

6. Klapptisch nach einem der Ansprüche 1 bis 5, **dadurch gekennzeichnet, dass** er als folienumhüllter Schaumstoff (13, 14) mit eingeschäumten Versteifungsschienen an den seitlichen Rändern ausgebildet ist.

## Claims

1. Folding table (1) on the rear side of the backrest of a passenger seat in an air, land or water vehicle, which can be moved between an idle position in which it is folded up against the backrest and a folded-down use position, and the side (2) of which that is visible in the idle position is configured as an advertisement carrier surface (8) for an interchangeable advertisement carrier (9),
wherein the side (2) of the folding table (1) that is configured as an advertisement carrier surface (8) has a depression (3) with undercuts (4) or grooves arranged at least in some areas,
and an insert (5) which holds the advertisement carrier (9) and which is adapted to the depression (3), or a frame which surrounds the insert (5) and engages over it in the edge region, can be clipped into the depression (3) by means of protrusions (6) which engage behind the undercuts (4) or grooves,
**characterised in that**
the insert (5) has a circumferential, groove-like depression (7), in which there is placed an elastic profiled ring (6) which forms the protrusion that engages behind the circumferential undercut (4).

2. Folding table according to claim 1, **characterised in that** the elastic profiled ring (6) consists of a tubular seal.

3. Folding table according to one of claims 1 or 2, **characterised in that** the insert (5) is provided with a transparent viewing surface (8), behind which the advertisement carrier (9) can be removably arranged, and has a circumferential, non-transparent edge.

4. Folding table according to one of claims 1 or 2, **characterised in that** the advertisement carrier surface (8) is designed as a screen.

5. Folding table according to one of claims 1 to 4, **characterised in that** a fold-out bottle or cup holder (11) is arranged next to the advertisement carrier surface (8).

6. Folding table according to one of claims 1 to 5, **characterised in that** it is formed as film-wrapped foam (13, 14) with stiffening rails integrated in the foam at the side edges.

## Revendications

1. Tablette pliante (1) sur la face arrière du dossier d'un siège passager dans un véhicule aérien, terrestre ou maritime, laquelle peut être réglée entre une position de repos pliée contre le dossier et une position de service dépliée, et dont la face (2), visible en position de repos, est réalisée sous la forme d'une surface de support publicitaire (8) pour un support publicitaire (9) amovible,
sachant que la face (2) de la tablette pliante (1), laquelle est réalisée comme surface de support publicitaire (8), comporte un creux (3) avec des contre-dépouilles (4) ou rainures ménagées au moins par zones,
et un insert (5), ajusté au creux (3) et recevant le support publicitaire (9), ou un cadre entourant l'insert (5) et s'engageant sur la zone de bordure, avec des saillies (6) s'engageant derrière les contre-dépouilles (4) ou rainures, peuvent être encliquetés dans le creux (3),
**caractérisée en ce que**
l'insert (5) comporte un creux (7) périphérique en forme de rainure, dans lequel est posée une bague profilée (6) élastique, qui forme la saillie s'engageant derrière la contre-dépouille (4) périphérique.

2. Tablette pliante selon la revendication 1, **caractérisée en ce que** la bague profilée (6) élastique est formée par un joint d'étanchéité tubulaire.

3. Tablette pliante selon la revendication 1 ou 2, **caractérisée en ce que** l'insert (5) est muni d'une face visible (8) transparente, derrière laquelle le support publicitaire (9) peut être disposé de manière amovible, et comporte un bord périphérique opaque.

4. Tablette pliante selon la revendication 1 ou 2, **caractérisée en ce que** la surface de support publicitaire (8) est réalisée sous la forme d'un écran.

5. Tablette pliante selon l'une quelconque des revendications 1 à 4, **caractérisée en ce qu'**un porte-bouteille ou porte-gobelet (11) rabattable est disposé à côté de la surface de support publicitaire (8).

6. Tablette pliante selon l'une quelconque des revendications 1 à 5, **caractérisée en ce qu'**elle est réalisée sous la forme d'une tablette en matériau alvéolaire (13, 14) entouré d'un film et muni de rails de renfort incorporés dans le matériau au niveau des bords latéraux.
